# EUROPEAN PATENT APPLICATION

(11) **EP 4 579 172 A1**
(43) Date of publication of application: **02.07.2025**
(21) Application number: 23856770.5
(22) Date of filing: 25.08.2023
(51) Int. Cl.: G01B 7/00, G08G 1/01, G08G 1/123

(54) **LINEAR OR ANGULAR POSITION SENSOR**

(30) Priority: 26.08.2022 ES 202230770
(71) Applicant: Piher Sensors & Controls, S.A., 31500 Tudela (Navara) (ES)
(72) Inventor: ÁLAVA ZUAZU, Ignacio, 31500 Tudela (Navara) (ES); FORNIÉS GARCÍA, Carlos, 31500 Tudela (Navara) (ES); RUIZ RODERO, Koldo, 31500 Tudela (Navara) (ES)
(86) International application number: PCT/ES2023/070528
(87) International publication number: WO 2024/042262

(57) **Abstract**

The invention comprises integrating at least two different technologies in the same sensor such that redundancy is obtained at the outputs, regardless of the supply and operation of the technology. These technologies may include Hall technology, inductive technology, TMR magnetic sensors, GMR magnetic sensors or other existing technologies.

## Description

### FIELD OF THE ART

This invention relates to a linear or angular position sensor which, while being applicable in various areas, has been developed principally for the automotive sector, in order to offer a sensor which includes two different sensorization technologies, so that if one should fail, this would not result in the failure of the sensor itself, thus preventing endangering the life of the user.

More specifically, the invention allows the incorporation in the automotive sector of a single sensor with redundant, different technology outputs (ASIL up to level D), instead of using two or more sensors, which constitutes a significant advantage for the users, through reducing the cost of components by using only one device, while also generating savings in purchasing, warehousing, installation and maintenance costs, in addition to vehicle weight reduction, which in turn results in lower fuel consumption and longer battery life.

### BACKGROUND TO THE INVENTION

In the automotive sector, there are safety related applications such as electric power steering (EPS), transmission, brake and accelerator pedals, among others.

The ISO 26262 (functional safety of electrical/electronic systems) standard, sets stringent requirements for diagnostic cover of random failures and the prevention of systemic faults, to achieve the highest safety level, denominated ASIL-D.

The ASIL-D level position sensors, typically such as for the steering column, or brake and accelerator pedals, give a very precise, unequivocal indication of the position of the application in question, (be it the steering wheel or pedal). These sensors are vital and make driving the vehicle safer. If a position sensor has a malfunction, the diagnostic mode required for high ASIL levels will send a warning message to the onboard computer, so that the driver can take appropriate precautions (reduce speed, pull over to the hard shoulder, etc.) but functional safety faults occur when a fault in a sensor output does not generate a fault diagnostic, and so does not send a warning signal, and these are the type of faults defined as functional safety faults.

Moreover, for electric power steering, these sensors must guarantee a very high level of precision, to assist in parking manoeuvres or stay within driving-lane limits. If there is a fault in these functions, the outcome could be fatal.

For applications with ASIL-D classified position sensors, such as the previously cited examples, these stringent requirements could be achieved typically by the use of redundant sensors, comparing their output signals in a control system.

Currently, to guarantee true redundancy, two sensors are used to perform the same function, in case one of them should generate a fault. Each sensor must have a separate power supply and independent output signals. This means that the two sensors function independently, increasing system reliability and achieving the highest safety level.

In addition to the redundancy required by the maximum ASIL-D level, diversification is also a requirement, in that both sensors cannot be based on the same technology so as to avoid the possibility of a common fault. Taking as an example Hall technology, in which the position signal is based on a magnetic current produced by a magnet, an external magnetic field in the vicinity of the vehicle could affect both sensors, giving rise to a simultaneous fault, which could have grave consequences.

The need to install two sensors also gives rise to the following disadvantages: the extra space required to fit two sensors, the cost, the time for fitting and synchronisation, as well as the possible dependence on two different suppliers to have different technologies.

### DESCRIPTION OF THE INVENTION

The linear or angular position sensor proposed by the invention, offers a fully satisfactory solution to the problem described above in each and every aspect discussed.

Therefore, and more specifically, the invention consists of the integration of at least two different technologies in the same sensor in such a way that redundancy is achieved in the outputs with independent power supplies and independent technological operation.

In the event of failure of one technology, the second technology remains as the redundancy, which, as it is unaffected by the causes of the failure, continues to provide a valid output.

Any technologies can be combined. By way of example, the following are cited:
- Inductive.
- Magnetic sensors (Hall, GMR, TMR).
- Resistive technology.
- Capacitive technology.

However, these do not exclude other existing sensorization technologies, or those which might arise in the future.

As an additional functionality, it is possible to integrate into the sensor a CAN output, or any other communication protocol, for greater versatility and additional applications.

With this solution higher levels of safety are obtained for a single sensor, which would be very difficult to achieve by any other means. This sensor provides redundancy in the outputs and diversification, as it based on independent technologies.

In this way, component costs are reduced, since only one device is used. Fitting is similarly affected, with cost savings in purchasing, warehousing, installation and maintenance, as well as reducing the weight of the vehicle, giving rise to lower fuel consumption and longer battery life.

With this configuration, this sensor is capable of providing ASIL level D.

For functional safety, it is necessary that the sensorization technologies be different, but for other types of applications, they could be the same.

Finally, concerning the power supplies to the sensor, these could equally be independent or dependent.

### DESCRIPTION OF THE DRAWINGS

To complement the description given below and with the aim of providing a better understanding of the characteristics of the invention, in line with a preferred example of a practical embodiment thereof, a set of drawings is included as an integral part of said description, for illustrative and non-limiting purposes:
Figure 1.- Shows a plan view of the linear or angular sensor, made to reflect the key element of this invention, in an initial manufacturing variant in which the sensor integrates inductive technology with magnetic technology (Hall, GMR, TMR, etc.). The figure does not show the targets (metal elements and magnets, which interact with said sensors) so as to give a clearer view of the structure envisaged.
Figure 2.- Shows a view similar to that of figure 1, but with the addition of the targets.

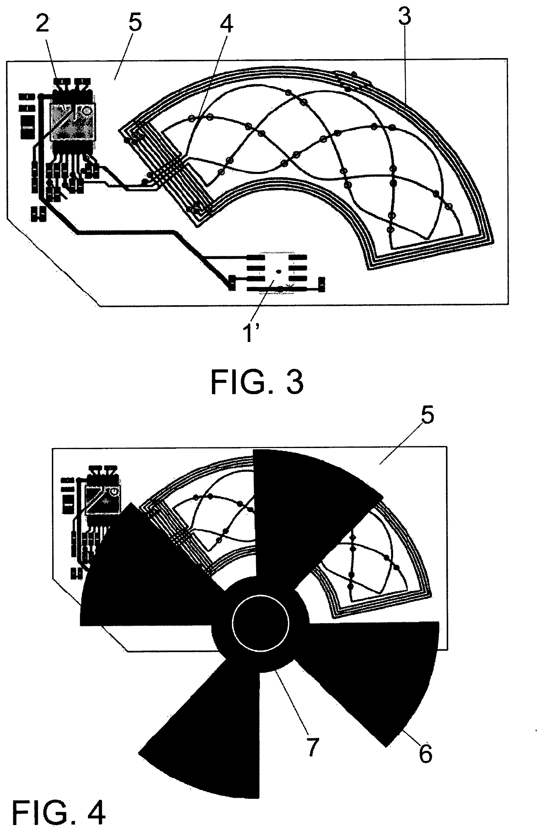

Figure 3.- Shows a similar view to figure 1, but corresponding to a variant embodiment of the sensor that uses inductive and magnetic (Hall, GMR, TMR, etc.) technologies. The figure does not show the targets so as to give a clearer view of the structure envisaged.
Figure 4.- Shows a similar view to that of figure 3, but with the addition of the targets.

### PREFERRED EMBODIMENT OF THE INVENTION

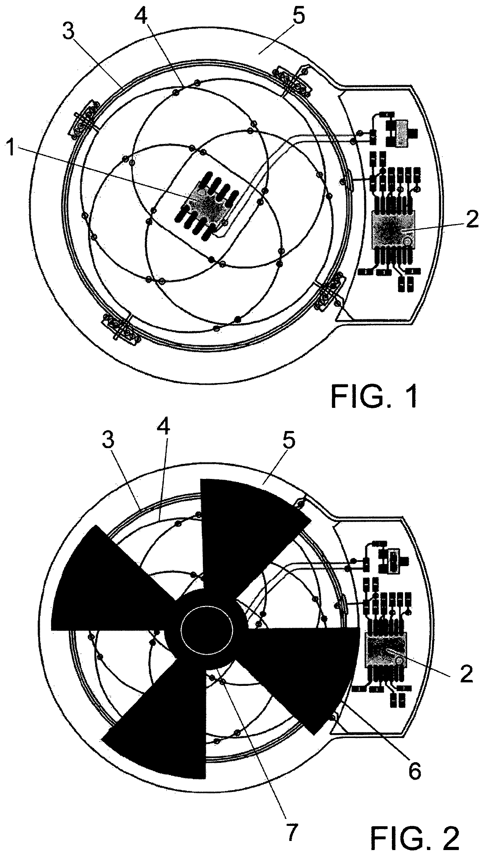

As shown in the annotated drawings, and in particular figures 1 and 2, it can be seen how in a first variant embodiment of the invention, the proposed sensor comprises one or more PCB boards (5) integrating an inductive sensor (2) connected to an excitation coil (3) and a receptor coil (4) over which an inductive object (6) is displaceable. The PCB (5) also integrates in parallel an independently functioning magnetic sensor (Hall, GMR, TMR, etc.) (1) over which a magnet (7) is displaceable.

For this inductive type sensor variant, the target can be any metallic element, even though it is fixed by any means to a non-metallic mounting, for example a metalized PCB.

Moreover, the device can include additional sensors with different technologies, that is to say, it can include more than two sensors, with no effect on the essence of the invention.

As stated previously, it is possible to integrate into the sensor a CAN output, or any other communication protocol, for greater versatility and additional applications.

The linear or angular sensor described is valid for applications that require functional safety.

Finally, the power supplies to the sensor could equally be independent or dependent.

## Claims

1. Linear or angular position sensor, **characterized in that** it consists of a device in which at least two sensorization technologies are integrated with total redundancy in the outputs and independent functioning of each technology, so that there are no elements common to both technologies that might give rise to a common fault.

2. Linear or angular position sensor, in accordance with claim no.1, **characterized in that** the sensorization technologies can be magnetic (Hall, TMR, GMR, etc.), inductive technology, resistive technology, or capacitive technology.

3. Linear or angular position sensor, in accordance with claim no.1, **characterized in that** it includes a digital communications output.

4. Linear or angular position sensor, in accordance with claims 1 and 3, **characterized in that** the communications output is analogical.

5. Linear or angular position sensor, in accordance with claim no.1, **characterized in that** the inductive type sensor variant, the target can be any metallic element, even though it is fixed by any means to a non-metallic mounting, for example metallized PCB type.

6. Linear or angular position sensor, in accordance with claims 1 and 3, **characterized in that** the technologies may be integrated into the same PCB (5) board or on several boards.

7. Linear or angular position sensor, in accordance with claim no. 1, **characterized in that** the sensor includes independent power supplies.

8. Linear or angular position sensor, in accordance with claim no.1, **characterized in that** the sensor includes dependent power supplies.

9. Linear or angular position sensor, in accordance with claim no.1, **characterized in that** the two sensorization technologies may be the same.
